# EUROPEAN PATENT APPLICATION

(11) **EP 2 662 559 A1**
(43) Date of publication of application: **13.11.2013**
(21) Application number: 12167313.1
(22) Date of filing: 09.05.2012
(51) Int. Cl.: F03D 1/00, F03D 1/06, F03D 11/00

(54) **Wind turbine**

(71) Applicant: Siemens Aktiengesellschaft, 80333 München (DE)
(72) Inventor: Munk-Hansen, Thorkil, 7323 Give (DK)

(57) **Abstract**

Wind turbine (14) with at least one support platform facilitating access within an interior (4) that is disposed in the interior (4) bounded by an outer surface of a rotor hub (1) and an inner surface of a spinner cover(2) and firmly secured to at least one of the rotor hub (1) and the spinner cover (2), wherein the support platform (3) comprises at least one flat section (10) for providing secure access within the interior (4) of the rotor hub (1).

## Description

The invention relates to a wind turbine with at least one support platform facilitating access within an interior.

Wind turbines need to be frequently accessed for maintenance purposes by maintenance personnel. Of particular importance is the access to an interior bounded by an outer surface of a rotor hub mounting a plurality of rotor blades and inner surface of a spinner cover of the wind turbine. The rotor hub is rotatably mounted with respect to a nacelle. The spinner cover is rigidly connected to the rotor hub and thus jointly rotates relative to the nacelle during operation of the wind turbine.

Rotational energy may be directly or indirectly transmitted towards a generator. Indirect transmission may be achieved by a gear box arranged between the generator and the rotor hub. In particular a main bearing rotatably supporting the rotor hub carries big loads during operation of the wind turbine. Thus, the main bearing and/or mounting means mounting rotor blades to the rotor hub are prone to fatigue of material so that regular inspections are required.

Typically, maintenance personnel enters the area between the inner surface of the spinner cover and the outer surface of the rotor hub from either outside via a hatch or from an access shaft disposed within a tower carrying the nacelle of the wind turbine. For safety reasons, the rotor hub is locked to the nacelle so as to prevent any rotation of the rotor hub when people access the interior for maintenance. However, moving around within the interior may be cumbersome and/or dangerous, so that safety gear such as ropes, belts, securing hooks and/or harnesses is required.

It is an object of the present invention to further improve the safety of wind turbines in particular for maintenance personal entering the interior of the wind turbine.

According to the invention, the object is achieved by the wind turbine as defined herein before, wherein at least one support platform is disposed in the interior bounded by the outer surface of the rotor hub and the inner surface of the spinner cover and firmly secured to at least one of the rotor hub and the spinner cover, wherein the support platform comprises at least one flat section for providing secure access within the interior of the rotor hub.

The at least one support platform is firmly secured to the rotor hub and/or the spinner cover so as to support at least the weight of an average sized man. Preferably, the at least one support platform is firmly connected to both the outer surface of the rotor hub and the inner surface of the spinner cover. Maintenance personnel entering interior may use the at least one flat section of the support platform as a means for accessing various areas. Accordingly, a person entering the interior for maintenance purposes steps on, stands on, sits on or makes otherwise use of the at least one section of the support platform to move around within the interior. The support platform reduces the need for wearing or carrying extensive safety gear such as safety belts, gears and/or harnesses without compromising security. This in turn makes inspection of the wind turbine quicker and easier so that maintenance expenses are reduced.

Preferably, the at least one support platform comprises a plurality of sections, wherein adjacent sections are arranged with respect to one another at an angle, in particular at an angle of 120° and/or 240°. Typically, the rotor hub may be locked with respect to the nacelle in various angular positions. The sections of the support platform are arranged with respect to one another at an angle, so that at least one of the sections extends horizontally in each position the rotor hub may be locked in. Furthermore, the at least one support platform may have a stair-like structure facilitating access to various areas of the rotor hub.

At least one flat auxiliary support platform may be disposed in the interior of the wind turbine for further improving the accessibility. Accordingly, the at least one flat auxiliary support platform is firmly secured to at least one of the rotor hub and the spinner cover so that it may carry the weight of person performing maintenance work. The at least one auxiliary support platform is displaced from the at least one support platform in a radial outward direction, i.e. located within the interior further away from a centre of the rotor hub than the at least one support platform. The centre of the rotor hub is defined by an axis of rotation of the wind turbine. In particular, the auxiliary support platform may be arranged close to a mounting means mounting a rotor blade to the rotor hub. Thus, the person entering the rotor hub may step on the support platform and access the auxiliary platform via the support platform to check whether or not the rotor blade is safely secured to the rotor hub by the mounting means.

In a preferred embodiment of the invention, a plurality of support platforms are disposed in the interior between the rotor hub and the spinner cover. The support platforms provide access to different parts of the interior so that extensive maintenance work may be easily performed on all components of the wind turbine requiring inspection.

Preferably, the number of support platforms corresponds to the number of rotor blades mounted to the rotor hub. The support platforms may be used to reach the respective mounting means mounting one of the rotor blades to the rotor hub. This in particular simplifies maintenance work involving the adjustment of the mounting means.

In another preferred embodiment, the support platforms are arranged around the centre of the rotor hub. The centre is defined by the axis of rotation of the rotor hub relative to the nacelle. Consequently, the support platforms provide secure access to and within the interior for various of angular positions, in which the rotor hub may be locked to the nacelle. Typically, the rotor hub may be locked in several different angular positions with respect to the nacelle. At least one of the support platforms that are circumferentially arranged around the centre of the rotor hub extends horizontally in each locked position. Thus, the corresponding flat section extending horizontally may be safely used as a tread, step or the like to access the interior of the rotor hub.

In one embodiment, an access opening is arranged around the centre of the rotor hub. The access opening provides access from an interior of the rotor hub that ay be entered viaan access shaft arranged within a tower mounting the nacelle of the wind turbine. The support platforms are circumferentially arranged around the access opening so that they are easily accessible for the person entering the space between the outer surface of the rotor hub an the inner surface of the spinner cover through the access opening.

Preferably, a plurality of auxiliary support platforms are disposed in the interior bounded by the outer surface of the rotor hub and the inner surface of the spinner cover. The auxiliary support platforms are firmly secured to at least one of the rotor hub and the spinner cover and arranged around the centre of the rotor hub. The auxiliary support platforms provide additional means for accessing various parts of the interior. The person performing maintenance work may thus make use of the support platforms and the auxiliary platforms so that the components requiring maintenance, in particular the mounting means and/or pitch bearings, may be reached.

In a specific embodiment of the invention, the rotor hub is mounts three rotor blades. The rotor blades extend radial outwards from the rotor hub and are arranged with respect to each other at an angle of 120°. The arrangement of the support platforms and/or auxiliary support platforms within the interior may resemble this three-fold symmetry. Accordingly, the support platforms and/or auxiliary support platforms are arranged offset around the centre of the rotor hub defined by the axis of rotation. The support platforms are offset from each other by an angle of 120° and/or the auxiliary support platforms are offset from each other by an angle of 120°. An arrangement of this kind beneficially supports the person performing maintenance work in moving around the interior of the rotor hub.

The support platforms and the auxiliary platforms are preferably arranged offset around the centre, wherein each support platform is offset from at least one of the auxiliary support platforms by an angle of 60°. Offset arrangement of the support platform with respect to the auxiliary support platform facilitates access of the support platform or the auxiliary platform from the other of the support platform or the auxiliary platform.

Accordingly, it is proposed that the number of auxiliary support platforms corresponds to the number of support platforms.

In one preferred embodiment of the invention at least one of the auxiliary support platforms comprise at least one tread or rung. Preferably the at least one auxiliary support platform comprises a plurality of treads or rungs so as to provide a structure similar to a stairway or ladder. Thus, the auxiliary support platform may be used by the person as a means to move in a vertical direction.

In another embodiment of the invention at least one ladder provides access between at least one of the auxiliary support platforms and at least one of the support platforms. In principle, the support platforms and/or auxiliary support platforms provide access in at least a horizontal direction, whereas the at least one ladder provides access in a vertical direction.

The spinner cover is preferably connected to the rotor hub by the at least one support platform. In particular the at least one support platform may be bolted to both the spinner cover and the rotor hub. The at least one support platform thus provides a means for firmly securing the spinner cover to the rotor hub.

In further development of the invention, it is suggested to omit a separate attachment means for firmly connect the spinner cover to the rotor hub. Consequently, the spinner cover is exclusively held by the one or more support platforms provided in the interior.

It is advantageous that the at least one section of the at least one support platform extends perpendicularly to at least one of the rotor blades mounted to the rotor hub. The rotor hub is lockable with respect to the nacelle in the at least one locked position, wherein, in the locked position, the at least one rotor blade extends from the rotor hub vertically upwards or vertical downwards. Consequently, the at least one section extending perpendicularly to the rotor blade pointing upwards or downwards extends horizontally so as to facilitate access to the rotor hub.

Further scope and applicability of the present invention will become apparent from the detailed description given herein after. However, it should be understood that the detailed description and specific examples, while indicating preferred embodiments of the invention, are given by way of illustration only. Various changes and modifications are within the spirit and scope of the invention and will become apparent to those skilled in the art.

Specific embodiments of the invention will be described in detail herein below with reference to the figures, wherein
- fig. 1: shows a schematic sectional view of a wind turbine comprising an interior bounded by a spinner cover and a rotor hub;
- fig. 2: shows the rotor hub with the spinner cover partially removed in an isometric front view;
- fig. 3: shows a front view of the rotor hub with the spinner cover partially removed, wherein a person performs maintenance work within the interior;
- fig. 4: shows another front view of the rotor hub with the person moving around the interior;
- fig. 5: shows another front view of the rotor hub with the person performing maintenance work in the interior
- fig. 6: shows a front view of the rotor hub locked in a locked position with a rotor blade pointing vertically downwards;
- fig. 7: shows another front view of the rotor hub with the person using support platforms to move upwards;
- fig. 8: shows another front view of the rotor hub with the person accessing a space between the rotor hub and the spinner cover;
- fig. 9: shows an isometric view of another embodiment of a rotor hub comprising a plurality of support platforms;
- fig. 10: illustrates the rotor hub of the embodiment of fig. 9 in a front view.

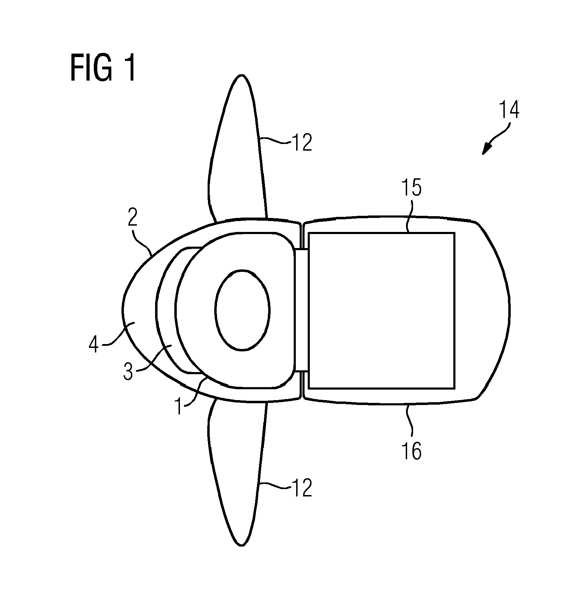

Fig. 1 schematically illustrates a wind turbine 14 having a support platform 3 facilitating access within an interior 4. The interior is bounded by an outer surface of a rotor hub 1 that transmits torque towards a generator 15 arranged stationary within a nacelle 16 of the wind turbine 14. A plurality of rotor blades 12 are connected to the rotor hub 1. The spinner cover 4 is rigidly connected to the rotor hub 1 and thus jointly rotates with the rotor hub 1 during operation of the wind turbine 14.

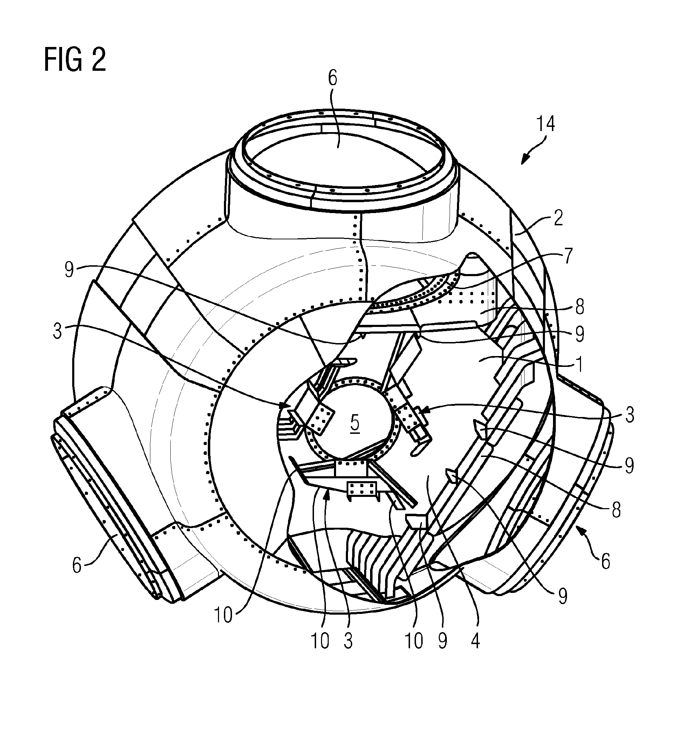

Fig. 2 shows an isometric front view of the rotor hub 1 and the spinner cover 2 according to a first embodiment of the invention. The rotor hub 1 is covered by the spinner cover 2 which is partially removed for illustrative purposes. A plurality of support platforms 3 are disposed within an interior 4 provided between the rotor hub 1 and the spinner cover 2. The support platforms 3 are circumferentially arranged around a central access opening 5 providing access from inside the rotor hub 1. The access opening 5 is arranged around a centre of the rotor hub 1. The centre is defined by an axis of rotation of the rotor hub 1 relative to the nacelle 16 of the wind turbine 14.

Three openings 6 are circumferentially arranged around the spinner cover 2. Each opening 6 receives a corresponding rotor blade 12 (not illustrated in fig. 2). The rotor blades 12 are mounted to the rotor hub 1 by annular mounting means 7. Auxiliary support platforms 8 are located adjacent to the mounting means 7.

In the exemplary embodiment shown in fig. 2, three auxiliary support platforms 8 are circumferentially arranged around the centre of the rotor hub 1 so as to surround the support platforms 3 arranged adjacent to the access opening 5. Each auxiliary support platform 8 has a substantially flat structure that mounts a plurality of treads 9. The auxiliary support platform 8 may be used as a means for moving in a vertical direction similar to a ladder.

Three support platforms 3 are arranged around the centre of the rotor hub 1. The support platforms 3 are arranged offset with respect to one another by an angle of 120°. The auxiliary support platforms 8 exhibit a similar configuration. Accordingly, the auxiliary support platforms 8 are arranged offset with respect to one another by an angle of 120°. The support platforms 3 and the auxiliary platforms 8 are also arranged offset, so that each support platform 3 is offset from at least one of the auxiliary support platforms 8 by an angle of 60°. In this manner easy access of the auxiliary support platforms 8 from the inner support platforms 3 is provided. Each support platform 3 has a stair-like structure, wherein flat sections 10 of the support platform 3 are arranged with respect to one another at an angle. Adjacent sections 10 of the support platform 3 are either arranged at an angle of 120° or 240°. The substantially flat sections 10 of the support platform 3 may be used by maintenance personnel entering the interior 4 of the wind turbine 14 via the access opening 5 as a step, rung or the like. In particular a person performing maintenance work within the interior 4 may sit on, stand on or otherwise use the flat sections 10 of the support platform 3 when accessing the interior 4.

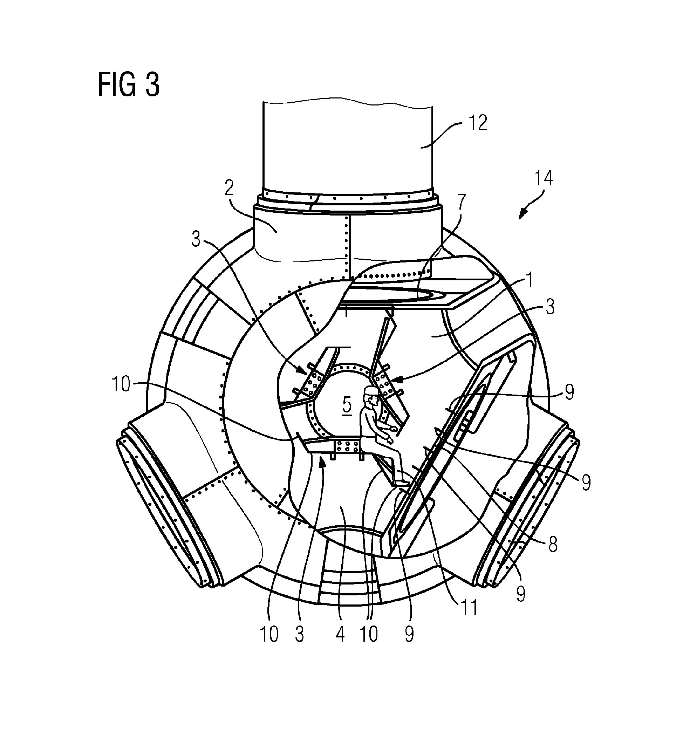

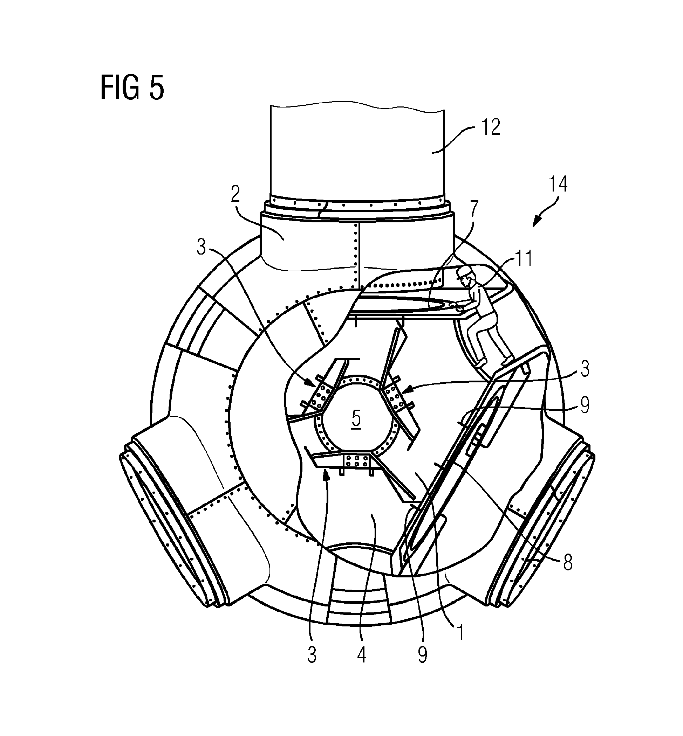

Figs. 3 to 5 illustrate the way how the person may use the support platforms 3 of the first embodiment of the invention to move around the interior 4 bounded by the outer surface of the rotor hub 1 and the inner surface of the spinner cover 2. Respectively, front views of the rotor hub 1 are shown wherein the spinner cover 2 covering the rotor hub 1 is partially removed for illustrative purposes.

For security reasons, the rotor hub 1 is locked relative to a nacelle 16 in a locked position when maintenance personal is about to enter the interior 4. In the locked position shown in figs. 3 to 5, one of the rotor blades 12 extends from the rotor hub 1 vertically upwards. As can be seen in fig. 3, two sections 10 of the lower most support platform 3 extend horizontally when the rotor hub 1 is positioned in the locked position. A person 11 sits on the lower most support platform 3 and moves further downwards and to the right.

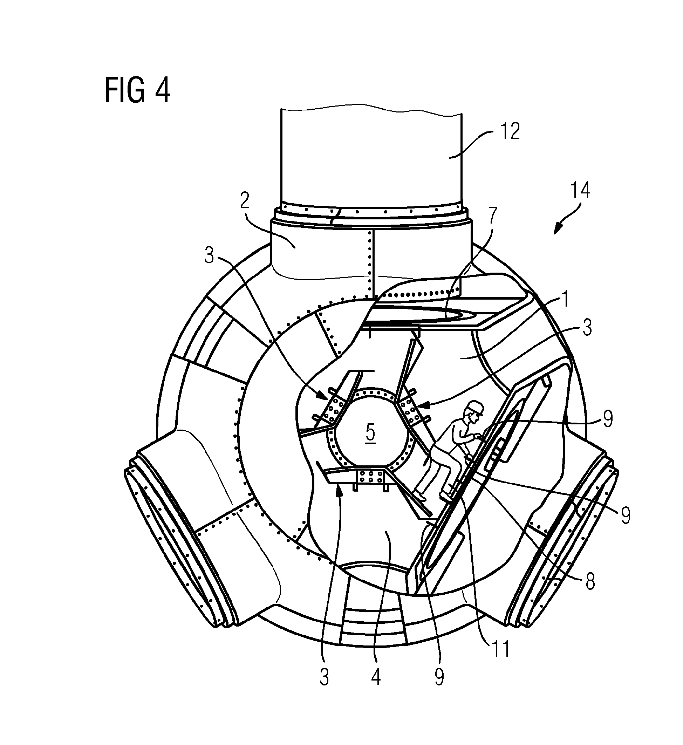

As can be seen in fig. 4, the person 11 makes use of the treads 9 disposed on the auxiliary support platform 8 to move upwards.

Fig. 54 shows the person 11 entering a space between the spinner cover 2 and the rotor hub 3, wherein the person 11 performs maintenance work on the upper most mounting means 7 adapted to carry one of the rotor blades 12.

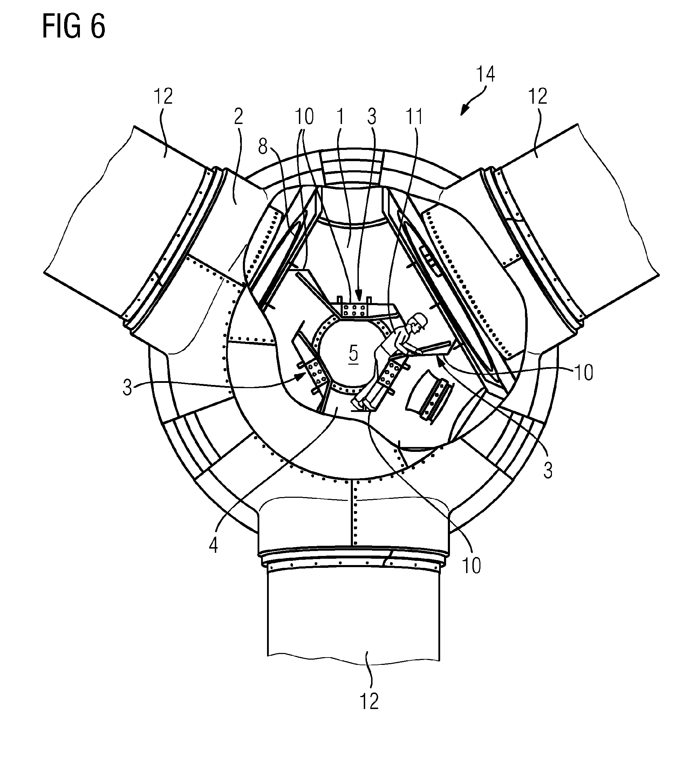

Figs. 6 to 8 show the person 11 moving around the interior 4 of the wind turbine 14, wherein the rotor hub 1 is locked with respect to the nacelle in a "bunny-ear-configuration". In the "bunny-ear-configuration" one of the rotor blades 12 points vertically downwards. As can be seen in fig. 6, various sections 10 of the support platforms 3 extend horizontally when the rotor hub 1 is locked in the locked position illustrated in figs. 6 to 8. The person 11 stands on the lower most section 10 of the lower left support platform 3 and uses the support platform 3 to climb upwards.

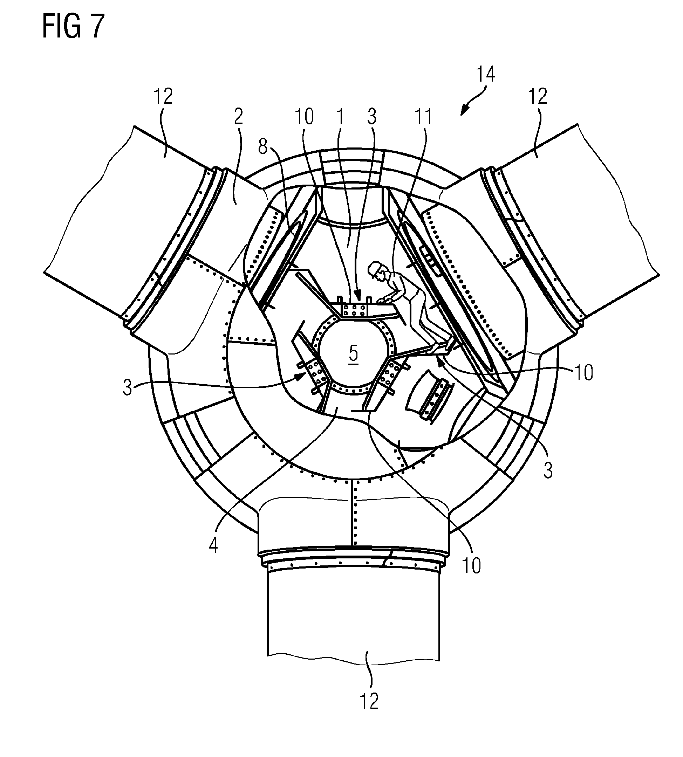

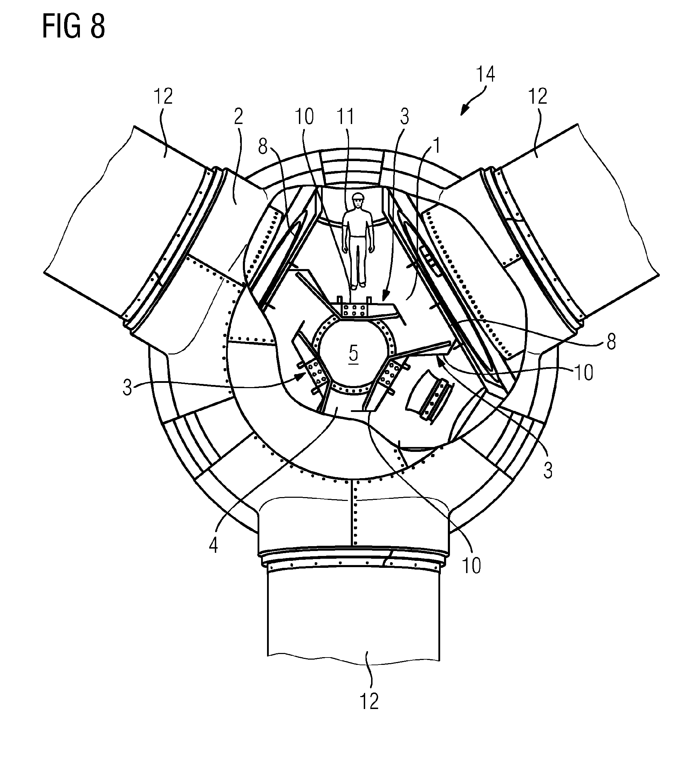

As can be seen in fig. 7, the horizontal sections 10 of the support platforms 3 support the person 11 in an effort to climb on the upper most support platform 3. From there, it is easy for the person 11 to enter a space between the spinner cover 2 and the rotor hub 1 as illustrated in fig. 8.

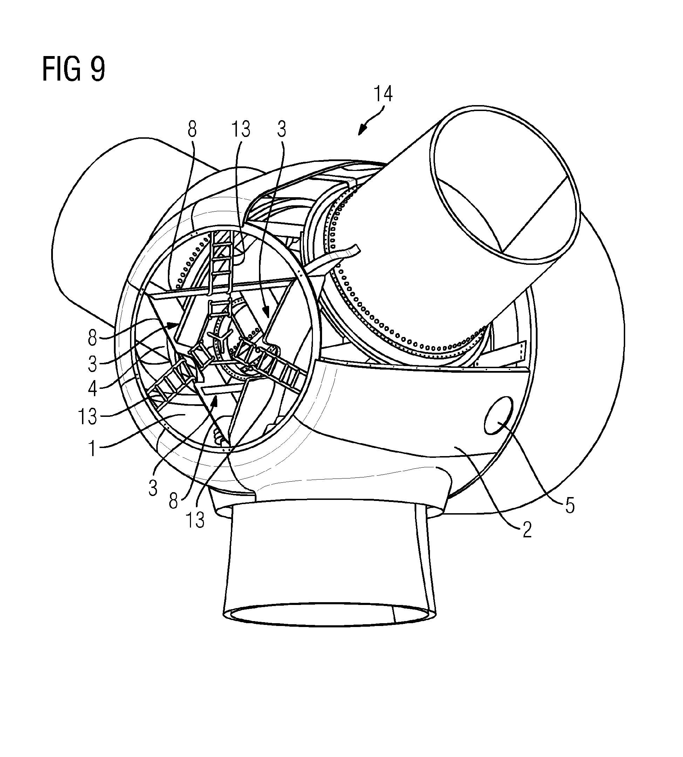

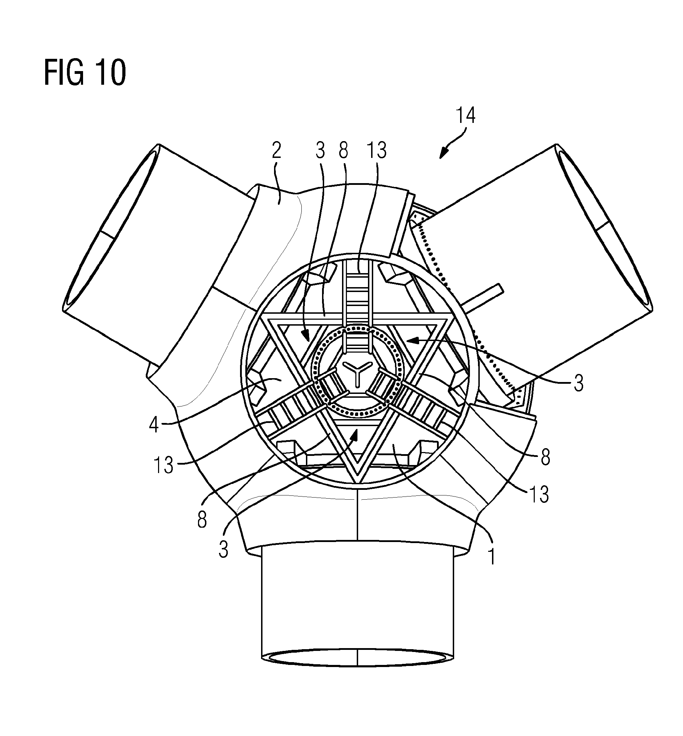

Fig. 9 and 10 illustrate a second embodiment of the rotor hub 1. Essentially, the second embodiment exhibits the features of the first embodiment shown in figs. 2 to 8.

The interior 4 between the rotor hub 1 and the spinner cover 2 of the second embodiment is accessed via access openings 5 that are arranged around an outer circumference of the spinner cover 2. Ladders 13 facilitate climbing inside the interior 4 provided between the rotor hub 1 and the spinner cover 2. The ladders 13 are arranged around the centre of the rotor hub 1, wherein each ladder 13 extends from the centre radial outwards. The second embodiment shown in fig. 9 and 10 features three ladders that are oriented at an angle of 120° relative to each other. In particular, the ladders 13 provide access between the support platforms 3 and the auxiliary support platforms 8.

Fig. 10 shows the rotor hub 1 of the second embodiment in a front view. The spinner cover 2 has been partially removed so that the interior 4 may be seen. Similar to the wind turbine 14 of the first embodiment, the second embodiment essentially features a three-fold rotational symmetry around the centre. Support platforms 3 and auxiliary support platforms 8 provide access to various areas within the interior 4. The support platforms 3 of the second embodiment have a substantially flat shape suitable for standing, stepping or sitting upon.

The support platforms 3 are rigidly connected to both the rotor hub 1 and the spinner cover 2 and thus serve as additionally attachment means.

Although the present invention has been described in detail with reference to the preferred embodiment, the present invention is not limited by the disclosed examples from which the skilled person is able to derive other variations without departing from the scope of the invention.

## Claims

1. Wind turbine (14) with at least one support platform facilitating access within an interior (4), **characterized in that** the at least one support platform (3) is arranged in the interior (4) bounded by an outer surface of a rotor hub (1) and an inner surface of a spinner cover (2) and firmly secured to at least one of the rotor hub (1) and the spinner cover (2), wherein the at least one support platform (3) comprises at least one flat section (10) for providing secure access within the interior (4) of the rotor hub (1).

2. Wind turbine (14) according to claim 1, **characterized in that** the at least one support platform (3) comprises a plurality of sections (10), wherein adjacent sections (10) are arranged with respect to one another at an angle, in particular at an angle of 120° or 240°.

3. Wind turbine (14) according to claim 1 or 2, **characterized in that** at least one flat auxiliary support platform (8) is disposed in the interior (4), firmly secured to at least one of the rotor hub (1) and the spinner cover (2) and displaced from the at least one support platform (3) in a radial outward direction.

4. Wind turbine (14) according to one of the previous claims, **characterized in that** a plurality of support platforms (3) are disposed in the interior (4).

5. Wind turbine (14) according to claim 4, **characterized in that** the number of support platforms (3) corresponds to the number of rotor blades (12) mounted to the rotor hub (1).

6. Wind turbine (14) according to claim 4 or 5, **characterized in that** the support platforms (3) are arranged around a centre of the rotor hub (1).

7. Wind turbine (14) according to claim 6, **characterized in that** an access opening (5) is arranged around the centre of the rotor hub (1).

8. Wind turbine (14) according to claim 6 or 7, **characterized in that** a plurality of auxiliary support platforms (8) are disposed in the interior (4) and firmly secured to at least one of the rotor hub (1) and the spinner cover (2), wherein the auxiliary platforms (8) are arranged around the centre of the rotor hub (1).

9. Wind turbine (14) according to claim 8, **characterized in that** the support platforms (3) are arranged offset around the centre, wherein the support platforms (3) are offset from each other by an angle of 120° and/or the auxiliary support platforms (8) are arranged offset around the centre, wherein the auxiliary support platforms (8) are offset from each other by an angle of 120°.

10. Wind turbine (14) according to claim 9, **characterized in that** the support platforms (3) and the auxiliary support platforms (8) are arranged offset around the centre, wherein each support platform (3) is offset from at least one of the auxiliary support platforms (8) by an angle of 60°.

11. Wind turbine (14) according to one of the claims 8 to 10, **characterized in that** the number of auxiliary support (8) platforms corresponds to the number of support platforms (3).

12. Wind turbine (14) according to one of the claims 8 to 11, **characterized in that** at least one of the auxiliary support platforms (8) comprise at least one tread (9).

13. Wind turbine (14) according to one of the claims 8 to 12, **characterized in that** at least one ladder (13) provides access between at least one of the auxiliary support platforms (8) and at least one of the support platforms (3).

14. Wind turbine (14) according to one of the previous claims, **characterized in that** spinner cover (2) is connected to the rotor hub (1) by the at least one support platform (8).

15. Wind turbine (14) according to one of the previous claims, **characterized in that** the at least one section (10) of the at least one support platform (3) extends perpendicularly to at least one of the rotor blades (12) mounted to the rotor hub (1), wherein the rotor hub (1) is lockable with respect to the nacelle in at least one locked position, wherein, in the locked position, the at least one rotor blade (12) extends from the rotor hub (1) vertically upwards or vertically downwards, so that the at least one section (10) of the at least one support platform (3) extends horizontally facilitating access to the rotor hub (1).
